# FASCICULE DE BREVET EUROPEEN

(11) **EP 2 162 207 B1**
(45) Date de publication et mention de la délivrance du brevet: **10.10.2018**
(21) Numéro de dépôt: 08805651.0
(22) Date de dépôt: 02.06.2008
(51) Int. Cl.: B01J 8/02, B01J 19/26, B01D 19/00, C10G 49/00

(54) **ENCEINTE CONTENANT UN LIT GRANULAIRE ET UNE DISTRIBUTION D'UNE PHASE GAZEUSE ET D'UNE PHASE LIQUIDE CIRCULANT EN UN ÉCOULEMENT ASCENDANT DANS CETTE ENCEINTE.**
GEHÄUSE MIT EINER GRANULAREN SCHICHT UND MIT VERTEILUNG EINER GASPHASE UND EINER FLÜSSIGPHASE, DIE ENTSPRECHEND EINEM ANSTEIGENDEN FLUSS IN BESAGTEM GEHÄUSE FLIESSEN
ENCLOSURE CONTAINING A GRANULAR BED AND A DISTRIBUTION OF A GASEOUS PHASE AND A LIQUID PHASE FLOWING ACCORDING TO AN ASCENDING FLOW IN SAID ENCLOSURE

(30) Priorité: 12.06.2007 FR 0704225
(43) Date de publication de la demande: 17.03.2010
(73) Titulaire: IFP Energies nouvelles, 92500 Rueil-Malmaison (FR)
(72) Inventeur: AUGIER, Frédéric, F-69360 Saint Symphorien D'Ozon (FR); BEAUMONT, Robert, F-69140 Rillieux La Pape (FR); BOYER, Christophe, F-69390 Charly (FR); DARMANCIER, Denis, F-38200 Vienne (FR)
(74) Mandataire: IFP Energies nouvelles
(86) Numéro de dépôt international: PCT/FR2008/000763
(87) Numéro de publication internationale: WO 2009/004186

(56) Documents cités:
- US-A- 5 076 908
- US-A- 5 603 904
- US-A- 5 648 051
- US-A- 5 885 534
- US-A1- 2004 004 030

## Description

La présente invention se rapporte à une enceinte (ou réacteur) contenant un lit granulaire et avec une distribution d'une phase gazeuse et d'une phase liquide circulant en un écoulement ascendant dans cette enceinte.

Elle se rapporte à une enceinte de traitement ou d'hydrotraitement d'une charge fluide comme pour le traitement catalytique de distillats issus des bruts de pétrole lourd.

Elle concerne plus particulièrement un système généralement disposé à l'intérieur de l'enceinte permettant la séparation de phases liquide et gazeuse ainsi que la distribution de ce gaz et de ce liquide dans la partie basse de cette enceinte dans le but de réaliser un écoulement co-courant ascendant de gaz et de liquide.

Il est largement connu que, dans le type d'enceinte avec lit catalytique fixe, il est nécessaire de distribuer d'une façon la plus homogène possible non seulement la phase gazeuse mais aussi la phase liquide.

Il est aussi nécessaire d'assurer une répartition la plus égale et la plus uniforme possible de ces deux phases tout au long de la section frontale de cette enceinte pour optimiser le contact gaz-liquide dans l'enceinte et pour faire fonctionner les différentes zones de cette enceinte de manière sensiblement identique.

De manière connue en soi, cette répartition peut être réalisée par différents moyens et notamment par un plateau distributeur perforé équipé de cheminées verticales. Ceci permet de distribuer le gaz par les perforations du plateau et le liquide par les cheminées, comme cela est mieux décrit dans le brevet DE 1 933 857.

Il est également connu une enceinte comportant une alimentation de gaz et de liquide où le gaz et le liquide sont introduits ensemble par une conduite située en fond d'enceinte. Cette enceinte comporte également un plateau distributeur à cheminées placé tout au long de sa section transversale et qui permet de distribuer le gaz et le liquide.

Ce type d'enceinte, bien qu'étant techniquement intéressant du fait de l'utilisation d'une seule conduite d'alimentation, présente néanmoins des inconvénients non négligeables.

En effet, le gaz et le liquide sont introduits dans l'enceinte sous forme d'un mélange et cette introduction va générer des perturbations de l'interface gaz-liquide présent sous le distributeur à cheminées.

En outre, le fonctionnement n'est pas optimisé, car le gaz se disperse mal sur la section transversale de l'enceinte, et un panache de gaz monte généralement au centre de celle-ci. Ceci perturbe l'interface gaz-liquide sous le plateau distributeur et entraîne une mauvaise répartition du gaz sous le plateau.

De plus, du gaz peut éventuellement pénétrer dans les cheminées, et dans le cas de panache de gaz, il en suivra une mauvaise distribution de gaz avec une présence de ce gaz plus importante dans la zone centrale du plateau. US2004004030 décrit une enceinte d'hydrotraitement avec un lit de garnissage.

La présente invention se propose de remédier aux inconvénients précités grâce à une enceinte à lit catalytique comprenant un système de séparation de phases liquide et gazeuse qui permette d'obtenir une phase gazeuse régulièrement répartie tout au long de la section de l'enceinte et ne venant pas perturber l'interface gaz liquide.

A cet effet, la présente invention concerne une enceinte selon la revendication 1.

Les moyens d'écoulement du liquide dégazé comprennent des trous sur sa paroi périphérique pour l'écoulement du liquide dégazé.

Les moyens d'accroissement comprennent une plaque.

Le boîtier comprend une tubulure d'alimentation placée à l'intérieur dudit boîtier et raccordée aux moyens d'introduction du mélange.

Le boîtier comprend une tubulure d'évacuation de gaz comportant des moyens de création de perte de charge.

Les moyens de création de perte de charge peuvent comprendre au moins une ouverture latérale sur la tubulure.

Une extrémité de la tubulure d'évacuation peut être placée à l'intérieur du boîtier et l'au moins une ouverture latérale peut être placée sur ladite extrémité.

Les moyens de création de perte de charge peuvent comprendre une diminution de la section de la tubulure d'évacuation.

Le boîtier peut comprendre un répartiteur de gaz désengagé permettant de distribuer ce gaz tout au long de la section de l'enceinte.

Le répartiteur peut comprendre au moins un bras radial muni de buses de diffusion de gaz.

L'enceinte peut comprendre un plateau sensiblement horizontal occupant toute la section de l'enceinte, des tubes creux traversant ledit plateau et des perforations placées sur ce plateau pour mettre en communication les deux côtés dudit plateau.

L'invention concerne également un procédé d'hydrotraitement d'une charge fluide ou de traitement catalytique de distillats mettant en oeuvre l'enceinte selon l'invention.

Les autres caractéristiques et avantages de l'invention seront mieux décrits à la lecture de la description qui va suivre, donnée à titre uniquement illustratif et non limitatif, et en se référant aux dessins annexés sur lesquels :
- la figure 1 est un schéma en coupe axiale partielle d'une enceinte comportant le système de séparateur de phases selon l'invention ;
- la figure 2 est une vue de détail à plus grande échelle et en coupe axiale du système de séparateur de phases de la figure 1 ;
- la figure 3 est un autre schéma en coupe axiale partielle d'une variante d'une enceinte comportant le système de séparateur de phases selon l'invention ;
- la figure 4 est un graphique illustrant le régime de fonctionnement du séparateur avec le débit de gaz Qgaz et le débit de liquide Qliq selon un exemple correspondant à l'enceinte de la figure 3 ;
- la figure 5 est un schéma en coupe axiale partielle d'une autre enceinte comportant une autre variante du système de séparateur de phases selon l'invention et
- la figure 6 est une vue de détail en coupe axiale du système de séparateur de phases selon une variante de la figure 2.

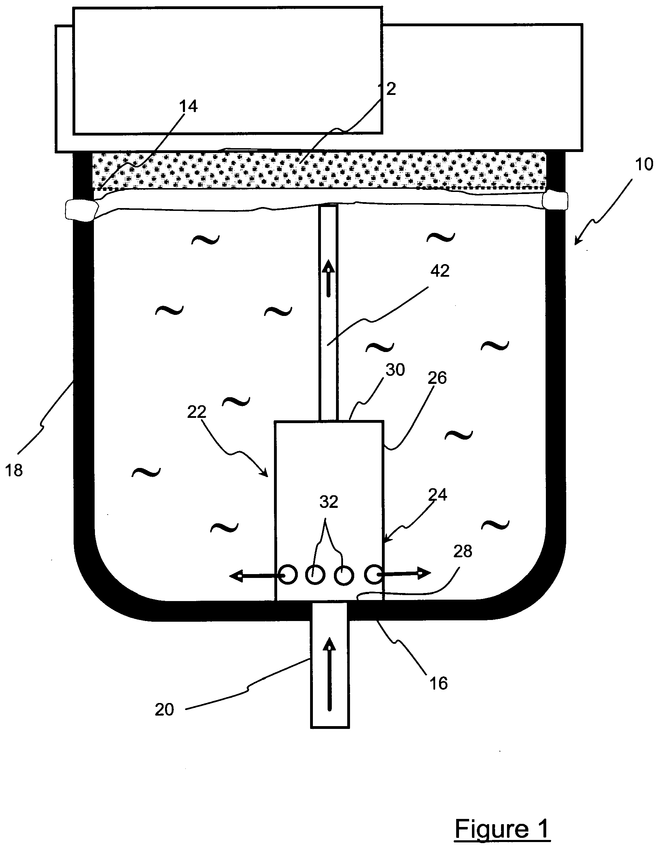

La figure 1 montre une enceinte fermée 10, généralement de forme tubulaire allongée verticale, qui comprend à sa partie supérieure des moyens d'introduction de produits (non représentés) permettant de former au moins un lit granulaire 12. Par lit granulaire, il est entendu un ensemble de particules solides ayant la forme de grain de dimensions de l'ordre de quelques millimètres et présentant avantageusement une activité catalytique permettant de former un lit catalytique.

Ce lit est délimité en partie basse de cette enceinte par un support perforé transversal 14 qui est placé à distance du fond 16 de l'enceinte et qui s'étend jusqu'à la paroi périphérique 18 de cette enceinte. Les espaces ajourés du support perforé sont tels qu'ils ne puissent pas laisser passer les particules mais puissent laisser passer tous gaz et tous liquides.

Il est bien entendu que le terme enceinte utilisé ci-dessus couvre aussi bien les colonnes que les réacteurs.

De même, le terme catalyseur concerne aussi bien le catalyseur frais que le catalyseur régénéré.

L'enceinte comporte sur son fond, et de préférence dans la région médiane de celui-ci, une conduite d'alimentation 20 d'un mélange d'une phase gazeuse et d'une phase liquide (ou charge). Avantageusement, la phase gazeuse comprend au moins en partie de l'hydrogène alors que la phase liquide comprend essentiellement des hydrocarbures. Le mélange peut éventuellement comporter d'autres phases comme de l'eau avec de l'air ou de l'oxygène, un ou des hydrocarbure(s) avec de l'air ou de l'oxygène.

C'est donc sur ce fond qu'est placé un système 22 permettant de séparer et de distribuer les phases contenues dans le mélange introduit dans l'enceinte, ce système étant dénommé dans la suite de la description décanteur.

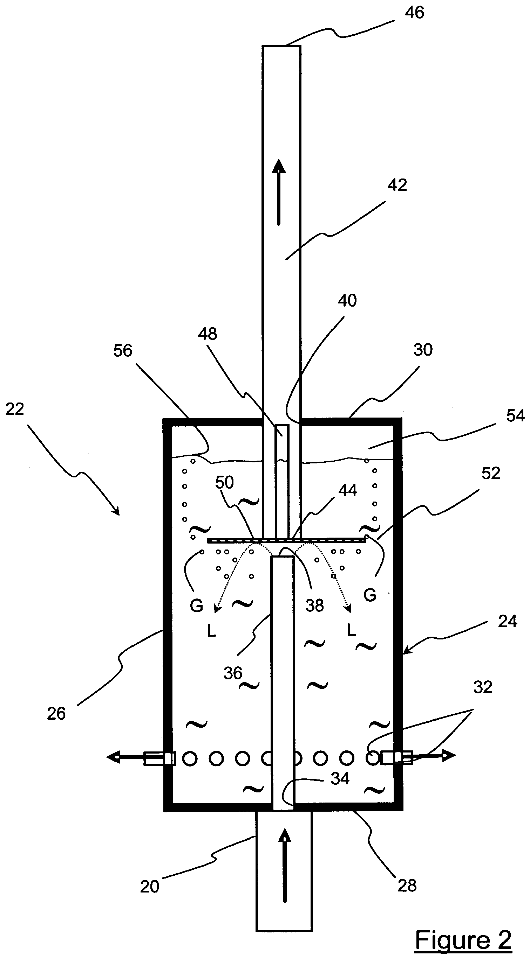

En se référant en plus à la figure 2, le décanteur 22 comprend un boîtier tubulaire 24 de forme générale allongée dans la direction de l'enceinte, de section transversale préférentiellement plus petite que la section transversale de cette enceinte et de hauteur inférieure à la hauteur entre le fond 16 de cette enceinte et le support 14.

Ce boîtier comprend une paroi périphérique 26 sensiblement circulaire délimitée par une paroi d'extrémité inférieure 28 s'appuyant sur le fond 16 de l'enceinte et une paroi d'extrémité supérieure 30 à distance du support 14.

La paroi périphérique porte, au voisinage de la paroi inférieure 28, des trous 32 qui permettent d'assurer la communication entre l'intérieur du boîtier et le fond de l'enceinte. Ces trous sont avantageusement régulièrement répartis circonférentiellement tout au long de la paroi périphérique du boîtier. Outre les trous de forme circulaire montrés sur la figure, ceux-ci peuvent avoir toutes formes et dispositions voulues, comme des trous oblongs, carrés, rectangulaires..., disposés symétriquement ou non par rapport à l'axe général du boîtier.

La paroi inférieure 28 du boîtier porte un alésage 34, de préférence circulaire et coaxial à l'axe général du boîtier, permettant la communication à étanchéité avec la conduite d'alimentation 20 de l'enceinte et dans lequel est raccordée, de manière étanche, une tubulure d'alimentation 36 sensiblement verticale dont le débouché 38 est à distance de la paroi supérieure 30.

Eventuellement et contrairement à ce qui est illustré sur la figure 2, les sections de la conduite 20, de l'alésage 34 et de la tubulure 36 peuvent être de même section pour limiter les pertes de charges.

La paroi supérieure 30 du boîtier comprend un orifice 40 de forme circulaire, avantageusement coaxial à celui de l'alésage 34. Cet orifice porte à étanchéité une tubulure d'évacuation 42 dont l'entrée 44 est située à l'intérieur du boîtier en étant à distance du débouché 38 de la tubulure d'admission 36 et dont la sortie 46 est à distance du support 14. La partie de la tubulure d'évacuation placée à l'intérieur du boîtier comporte sur sa paroi périphérique au moins une ouverture latérale 48, ici sous la forme d'une fente verticale s'étendant de l'entrée 44 et se terminant avant la paroi supérieure 30, dont les dimensions et la disposition permettent de créer une perte de charge pour le gaz comme cela sera décrit dans la suite de la description. Comme illustré sur la figure 2, le boîtier comporte des moyens d'accroissement de la séparation du gaz et du liquide. Ces moyens comprennent une plaque horizontale 50, dite plaque brise-jets, qui prend appui sur l'entrée 44 de la tubulure d'évacuation 42 en obturant de préférence cette entrée. La plaque, préférentiellement de forme circulaire, a une entendue surfacique telle que la section de cette plaque peut aller de la section du débouché 38 de la tubulure 36 à la section totale de l'enceinte. Cette plaque peut être perforée ou sous forme d'une grille ou être pleine, comme illustrée sur la figure. Dans cette dernière configuration, le bord périphérique de cette plaque est à distance de l'intérieur de la paroi périphérique du boîtier pour laisser un passage circulaire de circulation 52.

Durant le fonctionnement, le mélange de gaz et de liquide amené par la conduite d'alimentation 20 pénètre dans la tubulure d'admission 36 puis ressort par le débouché 38 de cette tubulure en venant au contact de la plaque brise-jets 50. Après cette introduction, le liquide du mélange se déplace par gravité en direction de la paroi inférieure 28 avec une vitesse de descente suffisamment faible pour permettre la remontée des bulles de gaz G désengagées du liquide en direction de la paroi supérieure 30 par la traversée du passage 52. De manière préférentielle, la vitesse de descente du liquide est comprise entre 0,4 et 0,05 m/s pour permettre une décantation totale du liquide avant sa sortie du boîtier. Il est à noter que, sous l'effet de l'impact du mélange sur la plaque brise-jets, les bulles de gaz se séparent du mélange encore plus rapidement et en plus grande quantité. Ainsi, il se produit une séparation des phases de ce mélange avec une phase liquide (flèche L) contenant majoritairement du liquide et une phase gazeuse contenant majoritairement du gaz désengagé du liquide.

La phase liquide dégazée, c'est-à-dire débarrassée d'une grande partie du gaz, sort du boîtier 24 par les trous 32 pour être admise dans le fond de l'enceinte.

Les bulles de gaz G se rassemblent au niveau de la partie haute du boîtier en formant un matelas gazeux 54 sous la paroi supérieure 30 et en délimitant une interface gaz-liquide 56. Ce matelas gazeux peut être réalisé grâce notamment à la présence des fentes 48 sur la tubulure d'évacuation 42 dont les dimensions et le nombre seront déterminés par l'homme du métier pour créer une perte de charge avec le gaz. De plus, ces fentes devront permettre de créer une couche de matelas suffisamment épaisse pour que le liquide dégazé ne soit pas aspiré dans la tubulure 42 par passage au travers de ces fentes 48.

Ainsi, après décantation du mélange introduit dans le boîtier, il subsiste un liquide dépourvu de gaz, de préférence situé en dessous de la plaque brise-jets 50, qui est évacué vers le fond de l'enceinte par les trous 32, et une phase gazeuse qui forme un matelas gazeux 54, situé de préférence au dessus de la plaque 50, et qui est évacuée au travers des fentes 48 pour circuler dans la tubulure d'évacuation 42 jusqu'à sa sortie 46.

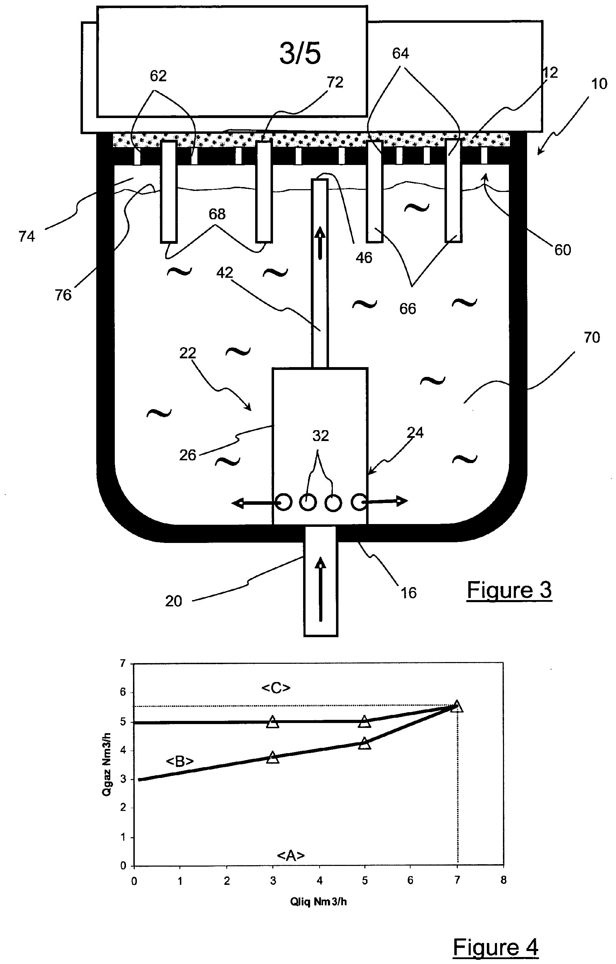

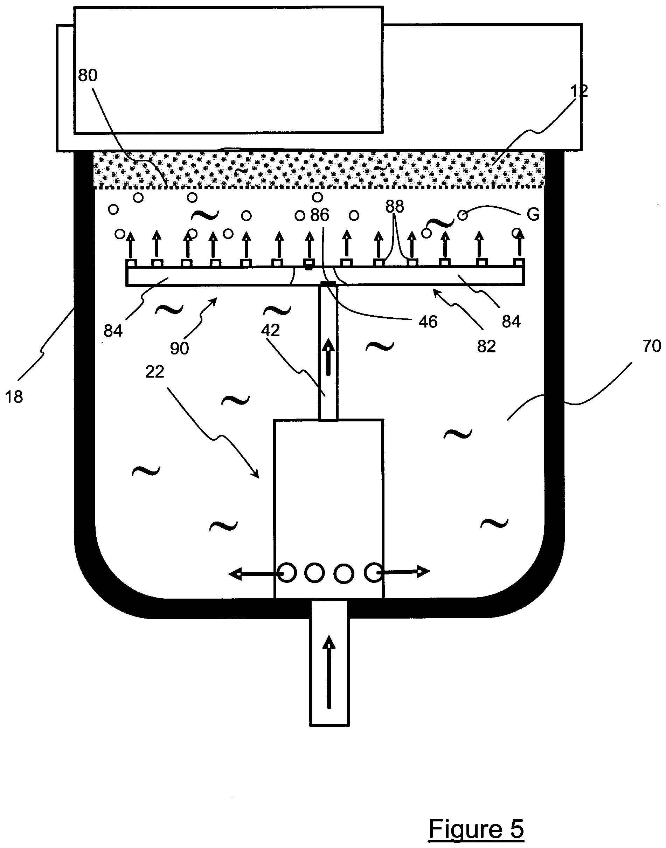

Ce gaz désengagé produit par ce décanteur pourra ensuite être utilisé soit avec une enceinte comprenant un plateau de distribution de gaz et de liquide (figure 3), soit avec une enceinte comportant uniquement une grille de support du lit catalytique (figure 5).

Sur la figure 3, l'enceinte 10 comprend un plateau sensiblement horizontal à cheminées 60, en lieu et place du support perforé 14, servant de support du lit catalytique 12 et qui est placé à distance du fond 16 de cette enceinte toute en s'étendant sur toute la section de l'enceinte.

Ce plateau comprend une multiplicité de perforations dont une partie 62 est utilisée pour distribuer le gaz sortant de la tubulure d'évacuation 42 dans le lit 12, et dont l'autre partie 64 de ces perforations reçoit des tubes creux verticaux 66, désignés dans la suite de la description par le terme de cheminée. Ces cheminées comprennent des extrémités inférieures ouvertes 68 qui plongent dans le liquide dégazé 70 contenu dans le fond de l'enceinte et qui provient du boîtier 24, ainsi que des extrémités supérieures 72 qui sont en communication avec le lit 12.

Avantageusement, la distance entre la sortie 46 de la tubulure d'évacuation 42 et la face inférieure du plateau est de l'ordre de 1 à 100 mm, et de préférence entre 10 et 50 mm, et cette distance est inférieure à la distance entre cette face inférieure et l'extrémité inférieure des cheminées 66.

Ainsi, le gaz sortant de la tubulure d'évacuation 42 est envoyé sous le plateau 60 où se forme un ciel gazeux 74 en délimitant une interface 76 entre le gaz et le liquide dégazé 70. Ce ciel est réalisé grâce à la perte de charge réalisée par les perforations 62 du plateau dont le nombre, la répartition et les dimensions sont déterminés par l'homme de l'art de façon à ce que l'interface 76 se trouve en dessous de la sortie de gaz 46.

Grâce à cela, cette sortie 46 est toujours située dans le ciel 74 et le gaz arrive directement dans ce ciel gazeux sans risquer de perturber l'interface 76.

Pendant le fonctionnement de l'enceinte, le gaz du ciel 74 traverse les perforations 62 alors que le liquide dégazé circule dans les cheminées 66. Ce gaz et ce liquide, qui ont été distribués de manière homogène tout au long du plateau 60, traversent ensuite le lit réactif catalytique en un mouvement ascendant pour réaliser la réaction souhaitée puis ressortent de l'enceinte par tous moyens connus de l'homme de l'art.

A titre d'exemple, le demandeur a utilisé une installation avec une enceinte telle que celle illustrée à la figure 3 avec un système eau-air à 25°C et 1 bar absolu (0,1 MPa).

L'enceinte utilisée a un diamètre de 500 mm et le plateau de distribution 60 est composé de 7 cheminées de 35 mm de diamètre et de 400 mm de haut avec des perforations 62 au nombre de 14 avec un diamètre de 0,9 mm.

Le décanteur 22 est composé d'un boîtier cylindrique 24 de 170 mm de diamètre et de 300 mm de hauteur. La plaque brise-jet est pleine et a un diamètre de 100 mm. Elle est située à 100 mm sous le haut du boîtier (la zone supérieure de coalescence du gaz peut faire 100 mm de hauteur).

La conduite 20 d'alimentation du mélange gaz/liquide fait 40 mm de diamètre. La tubulure d'évacuation 42 a un diamètre de 20 mm à 36 mm, ici 20 mm, et comprend une fente rectangulaire 48 de 1 mm à 5 mm, ici 1 mm. Les trous 32 du boîtier, au nombre de 20, sont placés à 10 mm de la paroi inférieure 28 et ont un diamètre de 10 mm.

Les résultats de l'utilisation de l'exemple d'une telle enceinte sont visibles sur le graphique de la figure 4, qui porte en abscisse le débit de la phase liquide et en ordonnée le débit de phase gazeuse et qui permet de définir trois zones de fonctionnement <A>, <B>, <C>.

Ainsi, une première zone <A> pour des débits de liquide allant du voisinage de 0 à environ 7Nm3/H et pour des débits de gaz allant d'environ 3Nm3/h à environ 5,5Nm3/h, permet de distinguer qu'il se produit un passage de liquide dans la tubulure d'évacuation 42 et qui ressort par la sortie 46.

Dans la deuxième zone <B> pour lequel il est prévu des débits de liquide allant du voisinage de 0 à environ 7Nm3/H et des débits de gaz compris allant d'environ 3Nm3/h et d'environ 5Nm3/h jusqu' à environ 5,5Nm3/h, l'enceinte permet de réaliser, grâce au décanteur, une séparation quasi parfaite entre la phase liquide et la phase gazeuse, avec une évacuation de la seule phase gazeuse par la tubulure 42 et une sortie de la seule phase liquide par les trous 32.

Pour la troisième zone <C>, les débits de liquide vont du voisinage de 0 à environ 7Nm3/H et les débits de gaz vont d'environ 5Nm3/h à environ 5,5Nm3/h. Dans cette zone il se produit un passage de gaz au travers des trous 32. Ceci perturbe le fonctionnement de l'enceinte en créant une sorte de bouillonnement au niveau de l'interface 76.

En conséquence, le fonctionnement de cette enceinte sera privilégié pour obtenir des débits de liquide et de gaz qui correspondent à la zone <A>, et préférentiellement à la zone <B>.

Dans le cas de l'utilisation du décanteur avec une enceinte comportant uniquement une grille 80 de support du lit catalytique en substitution du support perforé 14, comme illustré à la figure 5, il est prévu que le décanteur 22 comprenne en outre un répartiteur de gaz désengagé 82 (ou sparger). Ce répartiteur permet de distribuer, tout au long de la section de l'enceinte et de manière quasiment homogène, le gaz désengagé provenant de la sortie 46 de la tubulure 42 d'évacuation de gaz.

Ce répartiteur comporte au moins un bras transversal radial creux 84 sensiblement horizontal s'étendant à partir de la tubulure 42 en direction de la paroi 18 de l'enceinte. Avantageusement, il est prévu une multiplicité de bras régulièrement disposés angulairement à partir de la tubulure, par exemple six bras décalés à 60° les uns par rapport aux autres. Ce bras comporte un alésage de raccordement 86 permettant de relier par tous moyens connus, comme le brasage ou le soudage, l'intérieur de ce bras avec la sortie 46 de la tubulure 42. Ce bras comporte également une multiplicité de buses 88 réparties le long de chaque bras et de direction axiale vers le lit 12. Préférentiellement, l'extrémité libre du bras, celle opposée au raccordement 86 est obstruée par tous moyens, comme un bouchon. Comme illustré sur la figure 5, il est prévu d'utiliser au moins un tube 90 formant deux bras 84 dans le prolongement l'un de l'autre et de prévoir l'alésage de raccordement 86 dans la zone médiane du tube.

Le fonctionnement de cette enceinte est semblable à celui de l'enceinte de la figure 3 à l'exclusion de la présence d'un ciel gazeux en dessous de la grille.

Ainsi, le gaz désengagé circulant dans la tubulure 42 du décanteur pénètre dans le tube 90, circule dans chaque bras 84 pour ressortir par les buses 88, traverse la grille 80 et passe, en un mouvement ascendant, dans le lit 12. Le liquide dégazé 70 contenu dans le fond de l'enceinte traverse également la grille et passe de même dans le lit 12. Comme précédemment mentionné, le gaz et le liquide sont captés en partie haute de l'enceinte par tous moyens connus pour être traités et/ou stockés.

Bien entendu et cela sans sortir du cadre de l'invention, le décanteur 22 avec son répartiteur 82 de la figure 5 peut être utilisé en lieu et place du décanteur de la figure 3 avec l'avantage de pouvoir réaliser un ciel gazeux de manière plus rapide et plus homogène.

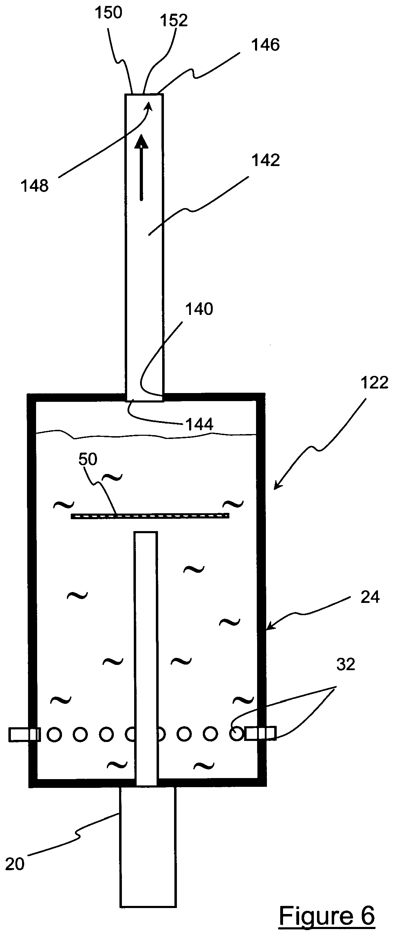

La variante du décanteur 122 de la figure 6 se distingue de celui de la figure 2 par le fait que l'orifice 140 porte à étanchéité une tubulure d'évacuation de gaz 142 dont l'entrée 144 est reliée à cet orifice sans pénétrer à l'intérieur du boîtier et que la sortie 146 de cette tubulure d'évacuation porte des moyens de restriction 148 de circulation de gaz. Ces moyens consistent en une diminution de la section de la sortie 146 qui peut être réalisée par tous moyens, comme une rondelle plane 150 reliée à cette sortie et comportant un perçage central 152 de petit diamètre, une grille, une plaque comportant une multiplicité de perçage, ...

Ainsi, cette diminution de section permet de réaliser une perte de charge avec le gaz qui est désengagé du liquide en créant de ce fait le matelas gazeux 54 sous la paroi supérieure 30.

Cette variante de décanteur peut aussi bien être utilisée avec l'enceinte des figures 1, 3 ou avec l'enceinte de la figure 5 en y additionnant, pour cette dernière, le répartiteur 82.

L'invention trouve son application, plus particulièrement mais non exclusivement, dans un procédé d'hydrotraitement d'une charge fluide ou de traitement catalytique de distillats mettant en oeuvre l'enceinte selon l'invention.

Notamment, il peut être envisagé que, pour des raisons de simplification de fabrication de l'enceinte, le boîtier 24 ne comporte pas de paroi inférieure 28 et que la fermeture de ce boîtier soit réalisée par un assemblage de la partie inférieure de la paroi 26 avec le fond 16. Ceci peut être réalisé par brasage, soudage, ...

De même, il a été déterminé expérimentalement que le décanteur avec la tubulure 42 comportant des fentes 48 permet de fonctionner sur une grande plage de débits liquide et gaz sans entraîner de gaz dans le liquide alors que le décanteur avec la tubulure 142 comportant des moyens de restrictions 148 sépare mieux le gaz et liquide.

Ainsi, dans le cas d'une utilisation avec un plateau à cheminées, il sera préférable d'utiliser le décanteur avec la tubulure comportant des fentes pour faire la perte de charge, car l'entraînement de liquide dans le gaz est sans incidence, alors qu'il évite l'entraînement de gaz dans le liquide.

## Revendications

1. Enceinte (10) comprenant au moins un lit de garnissage (12) et des moyens d'introduction (20) en fond d'enceinte d'un mélange d'un liquide avec un gaz, **caractérisé en ce que** l'enceinte comprend un système (22) de séparation de la phase liquide et de la phase gazeuse dudit mélange, **en ce que** le système est placé entre le lit (12) et lesdits moyens d'introduction du mélange et **en ce que** ledit système comprend un boîtier (24) comprenant :
- une tubulure d'alimentation (36) placée à l'intérieur dudit boîtier et raccordée aux moyens d'introduction (20) du mélange ;
- des moyens d'accroissement (50) de la séparation du gaz et du liquide se présentant sous la forme d'une plaque (50) en vis-à-vis des moyens d'introduction (20) du mélange,,
- des moyens d'écoulement (32) du liquide dégazé se présentant sous la forme de trous (32) situés sur la paroi périphérique (26) dudit boîtier pour l'écoulement du liquide dégazé ; et
- une tubulure d'évacuation de gaz (42, 142) comportant des moyens de création de perte de charge (48, 148)..

2. Enceinte selon la revendication 1, **caractérisé en ce que** les moyens de création de perte de charge comprennent au moins une ouverture latérale (48) sur la tubulure (42).

3. Enceinte selon la revendication 2, **caractérisé en ce qu'**une extrémité (44) de la tubulure d'évacuation est placée à l'intérieur du boîtier et **en ce que** l'au moins une ouverture latérale (48) est placée sur ladite extrémité.

4. Enceinte selon la revendication 1, **caractérisé en ce que** les moyens de création de perte de charge comprennent une diminution (152) de la section de la tubulure d'évacuation (142).

5. Enceinte selon l'une des revendications précédentes, **caractérisé en ce que** le boîtier (24) comprend un répartiteur de gaz désengagé (82) permettant de distribuer ce gaz tout au long de la section de l'enceinte.

6. Enceinte selon la revendication 5, **caractérisé en ce que** le répartiteur (82) comprend au moins un bras radial (84) muni de buses de diffusion de gaz (88).

7. Enceinte selon la revendication 1, **caractérisé en ce qu'**elle comprend un plateau sensiblement horizontal (60) occupant toute la section de l'enceinte, des tubes creux (66) traversant ledit plateau et des perforations (62) placées sur ce plateau pour mettre en communication les deux côtés dudit plateau.

8. Procédé d'hydrotraitement d'une charge fluide ou de traitement catalytique de distillats mettant en oeuvre l'enceinte selon l'une des revendications 1 à 7.

## Patentansprüche

1. Hülle (10), die mindestens ein Packmaterialbett (12) und Mittel (20) zum Einbringen eines Gemischs einer Flüssigkeit mit einem Gas am Boden der Hülle umfasst, **dadurch gekennzeichnet, dass** die Hülle ein System (22) zum Trennen der Flüssigphase und der Gasphase des Gemischs umfasst, dadurch, dass das System zwischen dem Bett (12) und den Mitteln zum Einbringen des Gemischs angeordnet ist, und dadurch, dass das System ein Gehäuse (24) umfasst, umfassend:
- ein Versorgungsrohr (36), das im Inneren des Gehäuses angeordnet ist und mit den Mitteln (20) zum Einbringen des Gemischs verbunden ist;
- Mittel (50) zum Verbessern der Trennung des Gases und der Flüssigkeit, in Form einer Platte (50), gegenüber den Mitteln (20) zum Einbringen des Gemischs;
- Mittel (32) zum Abführen der entgasten Flüssigkeit, in Form von Löchern (32), die an der peripheren Wand (26) des Gehäuses angeordnet sind, für die Abfuhr der entgasten Flüssigkeit; und
- ein Gasablassrohr (42, 142), umfassend Mittel (48, 148) zum Erzeugen eines Druckabfalls.

2. Hülle nach Anspruch 1, **dadurch gekennzeichnet, dass** die Mittel zum Erzeugen eines Druckabfalls mindestens eine laterale Öffnung (48) an dem Rohr (42) umfassen.

3. Hülle nach Anspruch 2, **dadurch gekennzeichnet, dass** ein Ende (44) des Ablassrohrs im Inneren des Gehäuses angeordnet ist, und dadurch, dass die mindestens eine laterale Öffnung (48) an dem Ende angeordnet ist.

4. Hülle nach Anspruch 1, **dadurch gekennzeichnet, dass** die Mittel zum Erzeugen eines Druckabfalls eine Verringerung (152) des Querschnitts des Ablassrohrs (142) umfassen.

5. Hülle nach einem der vorhergehenden Ansprüche, **dadurch gekennzeichnet, dass** das Gehäuse (24) einen Gasverteiler (82) für das abgetrennte Gas umfasst, der eine Verteilung dieses Gases entlang der gesamten Länge des Querschnitts der Hülle gestattet.

6. Hülle nach Anspruch 5, **dadurch gekennzeichnet, dass** der Verteiler (82) mindestens einen radialen Arm (84) umfasst, der mit Gasdiffusionsdüsen (88) versehen ist.

7. Hülle nach Anspruch 1, **dadurch gekennzeichnet, dass** diese eine im Wesentlichen horizontale Platte (60) umfasst, die den gesamten Querschnitt der Hülle einnimmt, wobei hohle Rohre (66) die Platte und Perforationen (62) durchqueren, die auf dieser Platte angeordnet sind, um die beiden Seiten der Platte miteinander in Kommunikation zu bringen.

8. Hydrobehandlungsverfahren einer fluiden Charge oder katalytische Behandlung von Destillaten, wobei die Hülle nach einem der Ansprüche 1 bis 7 verwendet wird.

## Claims

1. An enclosure (10) comprising at least one packed bed (12) and supply means (20) for delivering at the enclosure bottom a mixture of a liquid with a gas, **characterized in that** the enclosure comprises a system (22) for separating the liquid phase and the gas phase of said mixture, **in that** the system is arranged between bed (12) and said mixture supply means, and **in that** this system comprises a housing (24) comprising :
- a supply line (36) arranged inside said housing and connected to mixture delivery means (20) ;
- means (50) for increasing the gas and liquid separation in the form of a plate (50) arranged opposite mixture delivery means (20) ;
- flow means (32) for the degassed liquid in the form of holes (32) on the peripheral wall (26) thereof for the degassed liquid to flow through ; and
- discharge means (42,142) comprising pressure drop creation means (48, 148).

2. An enclosure as claimed in claim 1, **characterized in that** the pressure drop creation means comprise at least one lateral opening (48) on pipe (42).

3. An enclosure as claimed in claim 2, **characterized in that** one end (44) of the discharge pipe is arranged inside the housing and **in that** the at least one lateral opening (48) is arranged on said end.

4. An enclosure as claimed in claim 1, **characterized in that** the pressure drop creation means comprise a decrease (152) in the section of discharge pipe (142).

5. An enclosure as claimed in any one of the previous claims, **characterized in that** housing (24) comprises a disengaged gas dispatcher (82) allowing this gas to be distributed all along the section of the enclosure.

6. An enclosure as claimed in claim 5, **characterized in that** dispatcher (82) comprises at least one radial arm (84) provided with gas diffusion nozzles (88).

7. An enclosure as claimed in claim 1, **characterized in that** it comprises a substantially horizontal plate (60) occupying the entire section of the enclosure, hollow tubes (66) running through said plate and perforations (62) provided on this plate so as to communicate the two sides of said plate.

8. A fluid feedstock hydrotreating method or a distillate catalytic treating method using the enclosure as claimed in any one of claims 1 to 7.
